# EUROPEAN PATENT APPLICATION

(11) **EP 4 180 282 A1**
(43) Date of publication of application: **17.05.2023**
(21) Application number: 21208091.5
(22) Date of filing: 12.11.2021
(51) Int. Cl.: B60T 1/06, B60T 11/10, B60T 13/26, B60T 13/36, B60T 17/08, F16D 55/00, F16D 55/10, F16D 55/18, F16D 55/22, F16D 55/224, F16D 55/225, F16D 55/2255, F16D 55/228, F16D 55/31, F16D 55/32, F16D 55/33

(54) **BRAKE ASSEMBLY AND VEHICLE COMPRISING SUCH BRAKE ASSEMBLY**

(71) Applicant: KNORR-BREMSE Systeme für Nutzfahrzeuge GmbH, 80809 München (DE)
(72) Inventor: PESCHEL, Michael, 82296 Schöngeising (DE); BLESSING, Michael, 80687 München (DE); ADAMCZYK, Philipp, 82347 Bernried (DE); KLINGNER, Matthias, 82275 Emmering (DE); KRÜGER, Sven Philip, 81476 München (DE); SCHALLER, Sebastian, 86462 Langweid (DE); HÖS, Levente, 1047 Budapest (HU); GYÖRKE, Zsombor, 8360 Keszthely (HU); SZABO, Janos, 1101 Budapest (HU); MONORI, Gyula, 6065 Lakitelek (UG); MLINARCSEK, Csaba, 1165 Budapest (HU); KOKREHEL, Csaba, 1119 Budapest (HU); HEIGL, Korbinian, 85652 Pliening (DE); TOTH, Janos, 6000 Kecskemét (HU); SCHÖFBERGER, Tobias, 84048 Mainburg (DE); NAKAMURA, Tatsuro, 1027 Budapest (HU); HOLLOSI, Mate, 1097 Budapest (HU)

(57) **Abstract**

The present invention relates to a brake assembly (1), comprising:
a rotationally drivable brake element (10) rotationally supported about a rotational axis (R),
at least two braking elements (60, 60‴, 60ʺʺ), each configured to be translationally movable towards a radial surface (10a) of the brake element (10) extending in a radial direction with respect to the rotational axis (R) and/or towards an axial surface (10b) of the brake element (10) extending in an axial direction with respect to the rotational axis (R) for applying a braking force on the brake element (10), and
a rotationally drivable converter unit (30, 30', 30", 30‴, 30ʺʺ, 30‴ʺ) rotationally supported about a converter unit rotational axis (RC),
wherein the brake assembly (1) is configured to transfer the rotational movement of the converter unit (30, 30', 30", 30‴, 30ʺʺ, 30‴ʺ) into the translational movement of the at least two braking elements (60, 60‴, 60ʺʺ).

## Description

The present invention relates to a brake assembly and a vehicle comprising such brake assembly.

In vehicles, such as commercial vehicles, a pneumatic actuated disc brake is used as a mechanical friction brake. Such disc brake comprises a brake disc with an attached brake caliper including brake pads and a pneumatic actuator unit. Once the pneumatic actuator is pressurized, a piston inside the actuator is moved and the brake pads inside the brake caliper are pressed from both sides onto the brake disc, wherein the brake caliper is particularly configured as a floating caliper or fixed caliper.

The above described pneumatic actuated disc brake requires a lot of installation space. Especially with respect to the required installation space of upcoming E-axles for electrically powered vehicles, the installation space for the pneumatic actuated disc brake becomes further restricted. In other words, installation space required for axles may get in conflict with the installation space required for disc brakes.

Therefore, it is an object of the present invention to provide a brake assembly and a vehicle comprising such brake assembly capable of providing a reduced installation space, in particular a reduced axial installation space, required for the brake assembly.

The object is solved by the subject-matter of the independent claims. Further aspects of the present invention are subject to the dependent claims.

According to the present invention, a brake assembly comprises a brake element a rotationally drivable brake element rotationally supported about a rotational axis, at least two braking elements, each configured to be translationally movable towards a radial surface of the brake element extending in a radial direction with respect to the rotational axis and/or towards an axial surface of the brake element extending in an axial direction with respect to the rotational axis for applying a braking force on the brake element, and a rotationally drivable converter unit rotationally supported about a converter unit rotational axis. The brake assembly is configured to transfer the rotational movement of the converter unit into the translational movement of the at least two braking elements.

The brake assembly may be a disc brake assembly with a brake disc as brake element and at least two brake pads as the at least two braking elements. In such configuration, the at least two braking elements or brake pads, respectively, may be arranged to be moved at least towards a surface of the brake element or brake disc, respectively, which extends in a radial direction with respect to the rotational axis of the brake disc.

Alternatively, the brake assembly may be a drum brake assembly with a brake drum as brake element and at least two brake shoes as braking elements. In such configuration, the at least two braking elements or brake shoes, respectively, may be arranged to be moved at least towards a surface of the brake element or brake drum, respectively, which extends in an axial direction with respect to the rotational axis of the brake drum, preferably an inner surface of the brake drum enclosing the rotational axis.

The brake assembly is configured to actuate the at least two braking elements simultaneously to be moved towards the brake element to apply a braking force thereon. Preferably, the brake assembly is configured to actuate the two braking elements simultaneously to apply substantially the same braking force of the braking force to the brake element by each of the at least two braking elements. The term substantially relates to tolerances and/or wear, which may result in deviations of a predetermined configuration. However, in principle, applying substantially the same braking force may relate to an arrangement, wherein the converter unit moves the at least two braking elements in contact with the brake element simultaneously and afterwards moves the at least two braking elements towards the brake element simultaneously by the same amount. Therefore, the brake assembly may allow a substantially uniform application of the braking force on the brake element by the at least two braking elements. Even though the movement of the at least two braking elements is described as movement towards the brake element, the at least two braking elements are also movable in the opposite direction to reduce a braking force already applied or to move the at least two braking elements out of contact from the brake element. Such reverse movement may be implemented by a spring mechanism, the converter unit and or other components of the brake assembly.

When the converter unit is rotationally driven, the converter unit converts its rotational movement into a movement of the at least two braking elements towards the brake element at least over a predetermined range of rotational angles and therefore rotational positions of the converter unit with respect to the converter unit rotational axis. The converter unit may be configured to move the at least one braking element in direct contact therewith or indirectly by a transfer member or transfer mechanism arranged between the converter and the at least two braking elements. However, irrespective of a direct or indirect actuation of the at least two braking elements by the converter unit, the movement of the at least two braking elements towards the brake element is mainly dependent on the configuration of the converter unit and therefore a rotational angle of the converter unit with respect to the converter unit rotational axis. In other words, the movement of the at least two braking elements towards the brake element may be mainly dependent on the angular position of the converter unit with respect to the converter unit rotational axis.

Since the converter actuates the at least two braking elements by a rotational movement rather than by a translational movement, the installation space required may be at least reduced in an actuating or movement direction of the at least two braking elements. For example, an extension of the converter unit in the actuating or movement direction of the at least two braking elements may be mainly restricted to a predetermined moving distance of the at least two braking elements to apply the braking force to the brake element. The installation space may be further reduced by the one converter unit driving the at least two braking elements instead of each of the two braking elements being driven by separate drives. As per the above, a uniform application of the braking force may thereby also be improved.

In some embodiments, the at least two braking elements are arranged on opposite sides of the brake element with respect to the rotational axis or an axis perpendicular to the rotational axis.

With respect to a disc brake assembly as an example, at least two brake pads as the at least two braking elements being arranged on opposite sides of a brake disc as the brake element with respect to the rotational axis of the brake disc may be arranged on the same side of a radial surface of the brake disc extending in the radial direction with respect to the rotational axis of the brake disc. Preferably, the at least two braking elements on the same radial side of the brake disc are evenly distributed over the respective surface of the brake disc. For example, the at least two braking elements are distributed along a circumferential direction of the brake disc in substantially equal distances to each other. In the event of two braking elements the distance of the braking elements may substantially 180°, with three braking elements substantially 120° and so on. The term substantially is directed to the fact that an even distribution of the braking elements may reduce the risk of a tilting torque on the brake disc. However, the avoidance of a tilting torque may be to some extent tolerant with respect to slight differences from an exact equal distribution. Furthermore, design constraints may have to be considered with respect to such distribution. In such configuration, the converter unit may at least extend over the at least two brake pads in a radial direction with respect to the rotational axis of the brake disc to directly or indirectly transfer a respective rotational movement of the converter unit into a translational movement of the at least two brake pads towards the radial surface of the brake disc. Alternatively, the converter unit may indirectly transfer a respective rotational movement of the converter unit into a translational movement of the at least two brake pads towards the radial surface of the brake disc by acting on a transfer mechanism, such as a bridging member extending over the at least two brake pads.

Alternatively, the at least two brake pads may be arranged on opposite sides of the brake disc with respect to an axis perpendicular to the rotational axis of the brake disc and therefore assigned to different radial surfaces of the brake disc, i.e. the opposed radial surfaces of the brake disc. Preferably, the at least two brake pads are arranged substantially opposed to each other in a direction parallel to the rotational axis of the brake disc. In such configuration, the converter unit may extend on both sides of the brake disc in a radial direction with respect to the rotational axis of the brake disc over the at least two brake pads to directly or indirectly transfer a respective rotational movement of the converter unit into a translational movement of the at least two brake pads onto the respective radial surfaces of the brake disc extending radially with respect to the rotational axis of the brake disc. Alternatively, the converter unit may directly or indirectly transfer a respective rotational movement of the converter unit into a translational movement of at least one of the at least two brake pads towards the respective radial surface of the brake disc, while the at least other one of the at least two brake pads is indirectly actuated to move towards the respective other radial surface of the brake disc by a transfer mechanism, such as a floating caliper as addressed later or a transfer lever mechanism pulling the opposed brake pads towards each other when one of them is moved towards the brake disc, e.g. similar to a pantograph.

With respect to a drum brake assembly as an example, at least two brake shoes as the at least two braking elements may be arranged on opposite sides of a brake drum as the brake element with respect the rotational axis of the brake drum. Even though the at least two brake shoes may be arranged to act on the same surface of the brake drum, e.g. an inner axial surface of the brake drum with respect to the rotational axis, the at least two brake shoes are arranged on opposed sides with respect the rotational axis.

In some embodiments, the converter unit at least partially extends on two opposite sides of the brake element with respect to the rotational axis of the brake element and/or an axis perpendicular to the rotational axis of the brake element.

Accordingly, the converter unit may act on the at least two braking elements being arranged on opposite sides of the brake element as previously described and/or may accommodate other components to be arranged between the converter unit and the brake element.

The converter unit may be formed as an integral part with two opposed portions extending on the two opposite sides of the brake element in the brake assembly. Alternatively, the two opposed portions are separately formed and connected by at least one connection member and/or lever mechanism to be simultaneously rotationally moved about the converter unit rotational axis. The at least one connection member and/or lever mechanism may be configured to allow the distance of the two opposed portions and/or an angle of at least one of the opposed portion, in which such portion extends, to be adapted. For example, the opposed portions may be screwed to the connection member via an oblong hole of the connection member to allow the distance between the opposed portions to be adapted in accordance with a length of the oblong hole.

Preferably, at least one of the two opposed portions is configured to actively move at least one of the at least two braking elements towards the brake element. The term "actively move" is directed to the fact that the converter unit as such is configured to move the at least two braking elements towards the brake element according to its rotational movement but mainly by portions thereof intended for a direct contact with the at least one of the at least two braking elements or a transfer mechanism. The term "actively moved" relates to such portions. Such portions may therefore also be referred as active portions.

In some embodiments, the converter unit provides an at least partially annular or disc shape with at least one of the at least two braking elements being arranged between the brake element and a surface of the converter unit perpendicular to the converter unit rotational axis.

For example, the converter unit or portions thereof configured to actively move at least one of the at least two braking elements towards the brake element may be a ring actuator of a substantially annular shape. However, the ring actuator may not necessarily be formed as continuous ring but may also only represent a part thereof as a ring section. A ring actuator formed as continuous ring may provide a relatively higher stiffness, while a ring section as ring actuator may provide positive weight effects. In other words, the ring actuator may at least represent an annular shape of an angular range sufficient to actuate the at least one braking element over a predetermined moving distance and/or to actuate more than one braking element arranged between the annular surface of the ring actuator and the brake element. An annular surface of the ring actuator is a surface extending in a radial direction with respect to the converter unit rotational axis with the ring or ring section being curved towards the converter unit rotational axis. Consequently, a ring actuator comprises two opposed annular surfaces with the at least one of the at least two braking elements being arranged between one of the annular surfaces of the ring actuator and the brake element. The ring actuator is preferably coaxially arranged to the rotational axis of the brake element.

With respect to a disc brake assembly, the disc brake assembly may comprise the brake disc as brake element with at least two brake pads as braking elements facing the same radial surface of the brake disc with respect to the rotational axis of the brake disc. In the event that the ring actuator acts directly on the at least two brake pads, the annular surface of the ring actuator faces the at least two braking elements. The ring actuator may at least extend over an angular range to allow the at least two brake pads to be sufficiently moved towards the brake disc by rotation of the ring actuator. The converter unit rotational axis of ring actuator as converter unit or portion thereof may be arranged coaxially with the rotational axis of the brake disc. Accordingly, the ring actuator may be implemented as compact converter with good accessibility to the brake disc and other components of the brake assembly. However, the converter unit or portions thereof configured to actively move at least one of the at least two braking elements towards the brake element may be at least partially of a disc shape, which may allow coverage of components to be protected or to form part of a housing.

With at least two brake pads of the brake disc being arranged on both radial sides of the brake disc, a simultaneous movement of the at least two brake pads towards the brake disc may be also provided by the converter unit acting on such at least two braking elements simultaneously. For example, the converter unit may be formed by two ring actuators, for example, connected to each other by the at least one connection member. Due to the connection member, a rotational movement of one of the ring actuators also provides a rotational movement of the other ring actuator. The rotational movement may alternatively be initiated by the connection member to rotate both ring actuators. Such arrangement is not restricted to ring actuators and the actuating portions of the converter unit acting on opposite sides of the brake disc may be of different shapes as long as being connected by the connection member to be driven together.

In some embodiments, the converter unit rotational axis is concentrically aligned with the rotational axis of the brake element.

For example, such concentric or coaxial arrangement of the converter unit rotational axis and the rotational axis of the brake element may allow to arrange the converter unit or at least a portion thereof extending in the radial direction with respect to the converter unit rotational axis substantially in parallel to the radial extension of the brake element, e.g. the radial surfaces of a brake disc. Accordingly, the brake assembly with such arrangement may provide a compact design at least in the radial direction of the rotational axis of the brake element and the converter unit rotational axis, respectively. Due to the converter unit rotational axis being concentrically aligned with the rotational axis of the brake element, the required installation space in a direction perpendicular to the rotational axis of the brake element and the converter unit rotational axis, respectively, may also be reduced.

In some embodiments, the converter unit rotational axis is arranged eccentrically to the rotational axis of the brake element.

The converter unit rotational axis may thereby be offset but in parallel to the rotational axis of the brake element. Alternatively, the converter unit rotational axis may thereby be offset and inclined to the rotational axis of the brake element with or without intersecting the rotational axis of the brake element.

In some embodiments, the converter unit comprises at least one converter mechanism, preferably at least one control slide, more preferably at least one wedge member and/or at least one ball ramp mechanism, and/or a toggle lever mechanism and/or a spindle drive, preferably a ball screw, to transfer its rotational movement into the translational movement of at least one of the at least two braking elements.

The at least one converter mechanism represents at least one active portion to actively actuate at least one of the at least two braking elements to move the at least two braking elements towards the brake element. For example, the converter mechanism comprises at least one control slide, which may provide at least partially a topography in an actuating direction to actuate the at least one of the at least two braking elements to move towards the brake element. Accordingly, a point of impact of the control slide and therefore the converter unit on the at least one braking element or on a transfer member to transfer the actuation by the control slide to the at least one braking element may move in the actuating direction in accordance with the topography. For example, the converter unit may be rotationally supported about the converter rotational axis in parallel to the actuating direction with the topography of the control slide facing the at least one braking element or the transfer member in the actuating direction. In accordance with a rotational angle of the converter unit, the topography of the control slide actuates the at least one braking element or the transfer member in the actuating direction in accordance with a displacement of the point of impact of the control slide due to the topography being at least effective in a predetermined angular position or over a predetermined angular position range of the converter. The topography is therefore a surface of different heights in the actuating direction to transfer the rotational movement of the converter in a translational movement of the at least one braking element towards the brake element. The topography may only extend partially over the converter unit while other portions of the converter unit or control slide, respectively, may provide a constant height in the actuating direction to maintain the positional relationship between the at least one braking element and the brake element even if the converter is further rotationally moved over a corresponding range of angular positions.

The control slide may be a wedge member with the topography provided by a wedge surface with increasing height in the actuating direction to form the wedge. The wedge surface in contact with the at least one braking element or the transfer member thereby provides an advancing movement of the at least one braking element towards the brake element, when the converter is rotated to move the wedge surface in a direction with increasing height of the wedge surface. The wedge surface may be a straight inclined surface, a stepped surface or a curved surface. Preferably, the height of the wedge surface may increase continuously to improve a smooth sliding of the control slide on the at least one braking element or the transfer member.

Alternatively or in addition, the control slide may comprise a ball ramp mechanism with a ball guided between the control slide and the at least one braking element or the control slide and the transfer member in at least one ball track with a topography in the actuating direction. The at least one ball track may be provided by the control slide and/or the at least one braking member and/or the transfer member. In such configuration, the ball may provide different distances between the control slide and the at least one braking element or the control slide and the transfer element in the actuating direction in accordance with the position of the ball on the topography of the ball track. Since the converter is rotationally supported about the converter rotational axis but stationary in an axial direction with respect to the converter rotational axis, the ball ramp mechanism moves the at least one braking element towards the brake element, when the distance between the control slide and the at least one braking element or the control slide and the transfer element in the actuating direction is increased by the ball guided in the at least one ball track. The at least one ball may be retained in a ball retainer with the at least one ball track providing an axial movement of the at least one ball with respect to the converter rotational axis, for example, by moving the at least one ball in the axial direction relative to the ball retainer and/or by moving the ball retainer in the axial direction. The ball retainer may be configured as an annular ball retainer coaxially arranged with the converter rotational axis and/or the rotational axis of the brake element.

Similar as for the wedge surface of the wedge member, the ball track may comprise a guiding surface in the actuating direction formed as a straight inclined surface, a stepped surface or a curved surface. Preferably, the height or depth, respectively, of the guiding surface may increase continuously to improve a smooth sliding of the ball within the ball track. The at least one ball track may be curved in a plane perpendicular the converter rotational axis to allow a lateral guiding of the ball in the at least one ball track during a rotational movement of the converter unit.

The ball ramp mechanism may also comprise a plurality of balls guided in different ball tracks. The different ball tracks may be arranged in parallel and/or sequentially with respect to a circumferential direction with respect to the converter unit rotational axis and/or the rotational axis of the brake element. Alternatively or in addition, the converter unit may comprise a plurality of ball mechanisms arranged in sequence in a direction of the converter unit rotational axis and/or the rotational axis of the brake element.

The at least one control slide extends along a radial surface of the converter unit or a portion thereof facing the at least one braking element of the at least two braking elements or the transfer mechanism to be actuated by the control slide in a circumferential direction at least to the extend required for a respective actuation of the at least one braking element or transfer mechanism assigned thereto. For example, the control slide may be formed continuously on a respective radial surface of a ring actuator or at least along a circumferential path on the radial surface to sufficiently provide a predetermined actuation of respectively assigned braking elements. Alternatively a plurality of control slides may be distributed in the circumferential direction, each of which being assigned to at least one of the at least two braking elements.

Alternatively or in addition, the converter unit comprises a toggle lever mechanism to transfer the rotational movement of the converter unit into a movement of at least one braking element of the at least two braking elements and thereby the at least two braking elements towards the brake element. For example, two toggle levers are connected by a hinge to be spread apart or contracted in the actuating direction of the at least one braking element or the transfer member to move the at least one braking element towards the brake element. One end or portion of one of the toggle levers opposed to the hinge may be connected to or engageable with the at least one braking element or the transfer member, while one end or portion of the other toggle lever opposed to the hinge rests against a stationary support, for example, a portion of a brake caliper as described later. Spreading and contracting of the toggle levers may be performed by a rotational movement of the converter unit with a toggle lever actuator, for example, a toggle lever actuator stem with one end articulated attached to the hinge and the other end articulated attached to the converter unit. The converter unit rotational axis may therefore be offset from an axis extending through the respective ends of the two toggle levers representing the actuating directing of the toggle lever mechanism.

Alternatively or in addition, the converter unit comprises a spindle drive, preferably a ball screw. Accordingly, a rotational movement of a respective spindle is transferred into a translational movement of the at least one braking element of the at least two braking elements. For example, a ball screw as spindle drive may allow to reduce frictional forces and therefore wear.

Preferably, the converter unit and therefore the control slide and/or the toggle lever mechanism and/or a spindle drive, preferably a ball screw, is/are configured to provide a progressive force increase acting from the at least two braking elements on the brake element in accordance with a rotational angle of the converter unit with respect to the converter unit rotational axis. Accordingly, the control slide and/or the toggle lever mechanism is/are configured to progressively increase the braking force with an advanced rotational movement of the converter unit in a rotational direction of advancing the movement of the at least two braking elements towards the brake element. The force increase of the braking force is therefore preferably not linear but progressive.

In some embodiments, the converter unit comprising the at least one ball ramp mechanism comprises a stationary ball track arranged between the ball ramp mechanism and at least one of the at least two braking elements.

The stationary ball track may be provided by a separate component arranged between the ball ramp mechanism and at least one of the at least two braking elements or may be comprised by the at least one of the at least two braking elements. The stationary ball track faces the ball ramp mechanism in the direction of the converter unit rotational axis to receive at least one ball therein in interaction with the ball ramp mechanism. Accordingly, the at least one ball may be guided in the stationary ball track to transfer a translational movement but not a rotational movement as the at least one ball slides along the stationary ball track.

In some embodiments, the brake element is a brake disc, and the brake assembly comprises at least one brake caliper operatively connected to at least one of the at least two braking elements.

The at least one brake caliper is preferably a stationary component with respect to a rotational movement to support at least two braking elements or brake pads, respectively, arranged on different radial sides of the brake disc extending radially with respect to the rotational axis of the brake disc.

To simultaneously apply a braking force to the brake disc by the at least two braking elements, the at least two braking elements may be moved simultaneously towards the respective radial surfaces of the brake disc. Such simultaneous movement may be executed by the configuration of the caliper with the converter unit actuating the brake caliper as transfer member for both of the at least two braking elements or by the converter unit actuating one of the at least two braking elements, wherein such actuation is transferred to the other braking element by the brake caliper. Alternatively, the simultaneous movement of the at least two braking elements may be executed by the converter unit actuating the at least two braking elements without an operative interaction with the brake caliper.

In some embodiments, the brake assembly comprises at least two brake calipers distributed in a circumferential direction of the brake disc with the converter unit actuating at least one of the at least two braking elements of each of the at least two brake calipers as described above.

In some embodiments, the at least one brake caliper is a floating caliper or a fixed caliper.

For example, the brake caliper as floating caliper may be a first caliper portion facing one of the radial surfaces of the brake disc with one of the at least two braking elements arranged therebetween. Further, such floating caliper comprises a second caliper portion facing an opposite radial surface of the brake disc with the other one of the at least two braking elements arranged therebetween. At least one converter unit or a portion thereof, respectively, may be arranged between the first caliper portion and the respective braking element. With a rotational movement of the converter unit to move the respective braking element associated with one radial surface of the brake disc towards such surface, the first caliper portion may also come in contact with the converter and may thereby tend to move in an opposite direction with respect to the movement of the respective braking element, which results in an actuation of the second caliper portion to move the other respective braking element towards the brake disc. Such effect may be further supported or alternatively applied by the converter unit comprising control slides and/or toggle lever mechanisms on both radial surfaces of the converter extending radially with respect to the converter rotational axis opposed to each other with a control slide and/or toggle lever mechanism on the one radial surface of the converter acting on the respective braking element and the other control slide and/or toggle lever mechanism acting on the respective caliper portion. Instead of two separate toggle lever mechanisms also the same toggle lever mechanism may be used to act on the respective braking element as well as on the respective caliper portion.

According to the brake caliper as fixed calipers, the first and second caliper portions are provided in constant distance, i.e. not moveable towards and apart from each other in the actuating direction of the braking elements. Therefore, the converter unit may be configured to actuate the at least two braking elements supported in the fixed caliper simultaneously without a respective operative interaction with the fixed caliper. However, the fixed caliper may serve as support or counter bearing for the converter unit or other components in operative interaction with the converter unit to actuate the at least two braking elements.

In some embodiments, the converter unit is at least partially arranged between an inner surface of the brake caliper and at least one of the at least two braking elements.

As per the above example of the floating caliper, the converter unit or a portion thereof, preferably an active portion thereof, may be arranged at least on one side of the brake element between the inner surface of the brake caliper facing the at least one of the at least two braking elements supported by the brake caliper. An arrangement of the converter unit on one side of the brake element may be sufficient to actuate both of the at least two braking elements assigned to the brake caliper due to the brake caliper design, e.g. being configured as floating caliper, and/or by another transfer mechanism to transfer a movement of the at least one of the at least two braking elements towards the brake element into a corresponding movement of the other one of the at least two braking elements towards the brake element.

Alternatively, the converter unit may comprise two active portions extending in the radial direction on each respective side of the brake element associated with the respective at least one of the at least two braking elements of the brake caliper. Each of the active portions at least partially engages the brake caliper to be arranged between a respective inner surface of the brake caliper and at least the respective one of the at least two braking elements with respect to opposed sides of the brake element.

In some embodiments, the brake assembly comprises at least one slack adjusting unit at least partially disposed between the converter mechanism and the inner surface of the brake caliper and/or between the converter mechanism and the at least one of the at least two braking elements.

The at least one slack adjusting unit is configured to compensate for wear and/or tolerances in the actuating direction of the converter unit, specifically in the direction of the converter unit rotational axis and/or the rotational axis of the brake element. As the slack adjusting unit is at least partially disposed between the converter mechanism and the inner surface of the brake caliper and/or between the converter mechanism and the at least one of the at least two braking elements, the positional relationship between the converter mechanism and the at least one of the at least two braking elements assigned to such converter mechanism may be kept constant.

In some embodiments, the slack adjusting unit comprises at least two complementary adjusting control slides.

For example, the at least two complementary adjusting control slides may be two annular elements coaxially arranged with the converter unit rotational axis at least partially extending in a circumferential direction in parallel to a radial surface of the converter mechanism. The two annular elements are arranged adjacent to each other in the direction of the converter unit rotational axis with complementary ramp surfaces facing each other. The two annular elements are relatively moveable to each other about the converter unit rotational axis. In accordance with such relative rotational movement, the thickness of the slack adjusting unit in the direction of the converter unit rotational axis can be adapted, specifically increased, to adjust the position of the converter mechanism with respect to the at least one of the at least two braking elements assigned to such converter mechanism. In an exemplary configuration, the two complementary adjusting control slides may be driven via the converter mechanism. To transmit the rotational movement, a freewheel clutch or the like and, optionally, a ratio mechanism may be placed between one of the at least two adjusting control slides and the converter mechanism.

In some embodiments, the brake assembly comprises a bearing member, preferably an axial needle bearing, between the converter mechanism and the inner surface of the brake caliper.

Due to the bearing member, such as a roller bearing, preferably with needles or balls as rolling bodies, a rotational movement of the converter mechanism by the rotational movement of the converter unit about the converter unit rotational axis is not transferred to the respective inner surface of the brake caliper. Preferably, the bearing member is arranged between the converter mechanism and the slack adjusting unit, which is accordingly disposed between the bearing member and the respective inner surface of the brake caliper. Thereby, a rotational movement of the converter mechanism by the rotational movement of the converter unit about the converter unit rotational axis is not transferred to the slack adjusting unit as well as the respective inner surface of the brake caliper.

In some embodiments, the converter unit is rotationally drivable by a motor, preferably an electric motor, and/or a lever mechanism, preferably a pneumatically actuated lever mechanism.

The brake assembly therefore comprises the motor and/or the lever mechanism and/or a respective interface to connect a motor and/or lever mechanism to the converter unit.

Accordingly, a rotational movement of the motor may be directly transferable on the converter unit connected thereto to be rotationally driven.

Alternatively or in addition, the converter unit may be rotationally driven by a lever mechanism translationally driven by a translational driving device. For example, the brake assembly may comprise a lever mechanism rotatably supported about a stationary lever pivot, comprising at least one driving lever configured to engage at least one engaging member of the converter unit to transfer a rotational movement of the driving lever in a rotational movement of the converter unit. In such configuration, the converter unit is driven by the at least one driving lever of the lever mechanism. With the lever mechanism being rotatably supported about the stationary lever pivot, the driving lever is also rotatably supported about the stationary lever pivot. The stationary lever pivot may, for example, be attached to or comprised by a carrier member or a housing being stationary with respect to the brake element, e.g. a brake disc, rotatably supported about the rotational axis and the converter unit rotatably supported about the converter rotational axis. Accordingly, a rotational movement of the driving lever results in a rotational movement of the converter unit, when the driving lever engages the at least one engaging member of the converter unit. Such engagement may be dependent on an angular position or angular position range, respectively, of the driving lever. For example, the length of the driving lever and position of the stationary lever pivot may be set so that the driving lever only engages the engaging member over a rotational angle range of 45°. Alternatively, the driving lever may be connected to the at least one engaging member of the converter unit as a constant engagement to transfer any rotational movement of the driving lever in a translational movement of the converter unit.

In some embodiments, the engaging member is a projection, preferably a pin, more preferably comprising a rolling member in contact with the driving lever upon engagement, protruding from a surface of the converter.

The projection protrudes from the surface of the converter unit facing the driving lever. Specifically, the projection protrudes from a surface of the converter unit facing an extension of the driving lever in a radial direction with respect to the stationary lever pivot. Accordingly, the projection is configured to be engaged or caught by the driving lever at least in a predetermined angular position or angular position range. Such projection may be simply a pin but may also provide another shape dependent on the engagement mechanism. Furthermore, the projection may comprise a rolling member to allow the rolling member to scroll on the driving lever during engagement to reduce friction during the common respective rotational movement of the driving lever and converter unit. For example, a hollow cylinder may be centered on and rotatably supported about a pin to form the rolling member of the projection. Alternatively, other types of bearings or the like may be comprised by the projection to provide such functionality.

Alternatively, the engagement member of the converter unit may be a recess with the driving lever engaging such recess, for example, by a lever projection extending in a direction towards such recess. For example, the lever projection of a part thereof may be biased in such direction to allow an engagement at least in a predetermined angular position or angular position range.

In some embodiments, the lever mechanism further comprises a driven lever rotatably supported about the stationary lever pivot with the driving lever attached to the driven lever in a fixed position relationship to be driven by the driven lever about the stationary lever pivot, wherein the driven lever is driven by a translational driving device.

In such configuration, the driving lever is driven by the driven lever with both levers in a constant positional relation rotatably supported about the stationary lever pivot. Since the driven lever is driven by a translational driving device, a translational movement or actuation of the translational driving device or part thereof affecting the driven lever results in a rotational movement of the driven lever and therefore the driving lever about the stationary lever pivot to transfer the driving lever rotational movement in a rotational movement of the converter unit.

Alternatively, the lever mechanism may be rotationally driven. For example, the driving lever of the previously described lever mechanism may be driven by an electric motor or other rotational actuating means to drive the driving lever about the stationary lever pivot. However, the translational driving device actuating a driven lever to drive the driving lever may allow an increased flexibility to arrange the different components, in particular, with respect to different installation space constraints.

In some embodiments, the translational driving device comprises a translational driving member and one end of the driven lever opposed to the stationary lever pivot is rotatably attached thereto by a driven lever translational driving device pivot, and wherein the translational driving device is further rotatably supported by a stationary translational driving device pivot to be rotatably supported about the stationary translational driving device pivot.

Accordingly, the translational driving device or the translational driving member to be translationally moved, respectively, is connected to the driven lever by the driven lever translational driving device pivot. Therefore, the translational driving device and the driven lever are in constant engagement by the respective connection with the ability for a relative rotational movement about the driven lever translational driving device pivot with respect to each other. Such configuration may ease a bidirectional movement of the driven lever, therefore the driving lever and consequently the converter unit, when the translational driving device or the translational driving member to be translationally moved, respectively, is bidirectionally moved in the translational direction.

Alternatively, the translational driving device may be configured to actuate the driven lever upon engagement during its translational movement with a portion or end of the driven lever arranged in the moving path of the translational driving device or the translational driving member as part thereof to be translationally moved, respectively. In other words, the translational driving device may not be connected to the driven lever as described above but in engagement over at least a predetermined translational driving range of the translational driving device. A bidirectional movement of the driven lever, therefore of the driving lever, and consequently of the converter unit, may be also implemented in such configuration without the described connection but with the translational driving device only actuating the driven lever along its translational moving path without being affixed to each other. However, design requirements to ensure such bidirectional movement may increase. On the other hand, such configuration may allow to ease a replacement of components or an adaption with respect to different size configurations or tolerances.

With the driven lever being connected or in engagement with the translational driving member while being rotationally supported about the stationary lever pivot, the connection or point of engagement may be moved by a rotational movement of the driven lever about the stationary lever pivot in a direction different from the direction of the translational movement by the translational driving member. To compensate for such displacement of the connection or point of engagement, the translational driving device is rotatably supported by the stationary translational driving device pivot. In other words, the stationary translational driving device pivot allows the translational driving device to be moved rotationally in accordance with the displacement of the connection or point of engagement to ensure the rotational movement of the driven lever in contact with the translational driving device or the translational driving member, respectively. However, the translational driving device is still intended to provide a translational actuation of the driven lever, even though the translational driving device may perform a rotational evasive movement due to the displacement of the connection or point of engagement with the driven lever due to its rotation caused by the translational actuation. In other words, the translational driving device provides a translational actuation of the driven lever, while the driven lever may cause a rotational movement of the translational driving device in response to the translational actuation.

In some embodiments, the translational driving device is a piston actuator, preferably a pneumatic and/or spring loaded piston actuator.

The piston actuator may comprise an actuator piston as translational driving member. The use of the piston actuator may allow an easy implementation of the translational driving device. Pneumatic and/or spring loaded piston actuators may further support such easy implementation. The piston actuator may also be a hydraulic piston actuator or a spring loaded hydraulic piston actuator, respectively. Further, piston actuators may provide advantages with respect to weight and/or installation space. However, other linear drives, such as spindle drives or linear actuators, may also serve as translational driving devices.

With the piston actuator as translational driving device configured as spring loaded pneumatic or spring loaded hydraulic piston actuator, the brake assembly may be operated as a parking brake of a vehicle. Accordingly, the spring loaded pneumatic or spring loaded hydraulic piston actuator may be configured to move the actuator piston in an extended position in the translational movement direction to actuate the driven lever and therefore the converter unit to apply a braking force on the brake element via the at least one braking element, when a force caused by the pneumatic or hydraulic pressure falls below a counteracting spring force. In turn, the spring loaded pneumatic or spring loaded hydraulic piston actuator may retract the actuator piston upon pneumatic or hydraulic pressurization resulting in a force exceeding the counteracting spring force. In accordance with such retraction, the braking force on the brake element may be reduced or cancelled. Even though the described functionality may be advantageously with respect to parking brake operations, such configuration may also be used alternatively or in addition for service brake operations.

Alternatively, the spring loaded pneumatic or spring loaded hydraulic piston actuator may be configured to move the actuator piston in the retracted position in the translational movement direction to actuate the driven lever and therefore the converter unit to release a braking force on the brake element via the at least one braking element, when a force caused by the pneumatic or hydraulic pressure falls below a counteracting spring force. In turn, the spring loaded pneumatic or spring loaded hydraulic piston actuator may extend the actuator piston upon pneumatic or hydraulic pressurization resulting in a force exceeding the counteracting spring force. Even though the described functionality may be advantageous with respect to service brake operations, such configuration may also be used alternatively or in addition for parking brake operations.

In some embodiments, the piston actuator comprises an actuator piston as the translational driving member.

Accordingly, the actuator piston provides a translational movement to be transferred on the driven lever for a rotational movement of the driven lever and therefore the driving lever about the stationary lever pivot. Thereby, the translational movement of the actuator piston indirectly drives a rotational movement of the converter unit to transfer the rotational movement of the converter unit on the at least one braking element to be moved towards the brake element.

In some embodiments, the piston actuator comprises a piston actuator housing with an interior volume extending in a translational movement direction of the actuator piston with respect to a first piston actuator pivot as the stationary translational driving device pivot, wherein the interior volume is separated in the translational movement direction by a partition wall in an actuator piston receiving portion for at least partially accommodating the actuator piston and in an actuator piston driving piston receiving portion for at least partially accommodating an actuator piston driving piston configured to drive the actuator piston in a serial arrangement with respect to the translational movement direction.

The actuator piston may be translationally movable in the translational movement direction by being at least partially movable relative to the actuator piston receiving portion in the translational movement direction. The actuator piston extends through the piston actuator housing in the translational movement direction to be connected or to come in engagement with a member to be driven by the actuator piston, such as the driven lever of the lever mechanism. The opening for the actuator piston extending through the piston actuator housing and therefore beyond the piston actuator housing may be sealed to the actuator piston to allow a relative movement in the translational movement direction but to seal the actuator piston receiving portion against a pressure exchange and/or environmental influences.

Alternatively, the actuator piston may be stationary positioned within the actuator piston receiving portion. In such configuration, a translational movement of the actuator piston requires a translational movement of the piston actuator housing. In such configuration, a connection or engagement of the position actuator with a member to be driven by the piston actuator, such as the driven lever of the lever mechanism may also be provided by the piston actuator housing instead of the actuator piston, if the piston actuator housing is moveable in the translational movement direction.

The partition wall may be a continuous impermeable wall to hermetically seal the interior volume of the actuator piston receiving portion from the interior volume of the actuator piston driving piston receiving portion. Alternatively, the partition wall may be configured as impermeable wall with a through opening to allow the actuator piston driving piston to pass through the partition wall to drive the actuator piston in the translational movement direction when the actuator piston driving piston is configured for a relative movement with respect to the piston actuator housing in the translational movement direction. In both configurations, the partition wall may also be configured to only provide a piston stop for the actuator piston and/or actuator piston driving piston without the requirement of being continuous and/or impermeable to seal the interior volume of the actuator piston receiving portion from the interior volume of the actuator piston driving piston receiving portion.

With the piston actuator comprising the first piston actuator pivot as stationary pivot, a relative movement of the actuator piston with respect to the piston actuator housing comprising the first piston actuator pivot, or of the piston actuator housing with respect to the actuator piston driving piston comprising the first piston actuator pivot may result in a translational movement of the actuator piston with respect to the first piston actuator pivot. Accordingly, the actuator piston may perform a direct or indirect translational movement in the translational movement direction.

In some embodiments, the piston actuator comprises at least one spring member and the actuator piston driving piston receiving portion is configured to be pressurized to move the actuator piston driving piston against a spring force by the at least one spring member in the translational movement direction, wherein the piston actuator is configured to extend the actuator piston with respect to the first piston actuator pivot in the translational movement direction when a force in the translational movement direction resulting from the pressure in the actuator piston driving piston receiving portion falls below the spring force in the translational movement direction.

The spring member may, for example, bias the actuator piston driving piston towards the translational movement direction to extend the actuator piston with respect to the first piston actuator pivot. With a pressurization of the actuator piston driving piston receiving portion, the actuator piston driving piston is moved in an opposite direction to the biasing force by the spring member, when the force resulting from such pressurization exceeds the spring force of the spring member in such direction. The actuator piston can thereby be retracted with respect to the first piston actuator pivot. Consequently, such configuration allows a bidirectional movement of the actuator piston with respect to the first piston actuator pivot in the translational movement direction.

According to the bidirectional movement of the actuator piston with respect to the first piston actuator pivot in the translational movement direction based on the spring member and the pressurization of the actuator piston driving piston receiving portion, the piston actuator may be a pneumatic or hydraulic piston actuator.

In some embodiments, an actuator piston driving piston stem of the actuator piston driving piston extends through the piston actuator housing opposite to the partition wall in the translational movement direction with at least one actuator piston driving piston stop protruding outside the piston actuator housing in a radial direction with respect to the translational movement direction and extending beyond the piston actuator housing in the radial direction. The piston actuator housing comprises at least one piston actuator housing stop protruding in the radial direction with respect to the translational movement direction and facing the at least one actuator piston driving piston stop the translational movement direction. Further, the at least one spring member is arranged between the at least one actuator piston driving piston stop and the at least one piston actuator housing stop.

The above configuration allows a comparably compact design with respect to the length of the piston actuator in the translational movement direction as the spring member is not arranged in series with the actuator piston driving piston and the actuator piston in the translational movement direction but in parallel thereto.

In some embodiments, the actuator piston driving piston stem of the actuator piston driving piston extends through the partition wall to contact and move the actuator piston in the translational movement direction upon a translational movement of the actuator piston driving piston in the translational movement direction.

For example, the actuator piston driving piston may be arranged in the actuator piston driving piston receiving portion to be at least partially moveable therein in the translational movement direction. The actuator piston driving piston may comprise an actuator piston driving piston area with the actuator piston driving piston stem protruding therefrom in the translational movement direction towards the partition wall to pass therethrough. The actuator piston driving piston area may be configured to extend in a radial direction with respect to the translational movement direction to provide a sealed interior volume between the partition wall and the actuator piston driving piston area radially enclosed by the piston actuator housing. The interior volume formed thereby may be pressurized to provide a compression force on the actuator piston driving piston area in a direction away from the partition wall. A spring member may be arranged between an opposite side of the actuator piston driving piston area in the translational movement direction and an interior wall or stop opposite to the actuator piston driving piston area in the translational movement direction. The spring member may be a compression spring with the spring force acting in the translational movement direction. A respective translational movement of the actuator piston driving piston may be based on a force ratio of the compression force and spring force acting in opposite directions. With the compression force being lower than the spring force, the actuator piston driving piston is moved in direction towards the actuator piston, thereby extending the actuator piston with respect to the first piston actuator pivot. In turn, with the compression force being higher than the spring force, the actuator piston driving piston is moved in direction away from the actuator piston. The actuator piston may thereby be retracted with respect to the first piston actuator pivot, either by being connected to the actuator piston driving piston or by another spring member in the actuator piston receiving portion acting on the actuator piston in a direction towards the partition wall.

In another aspect, the present invention relates to a vehicle comprising a brake assembly as previously described, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.

The brake assembly is advantageously applied for such vehicles according to the characteristic installation space constraints.

Further advantages, aspects and details of the invention are subject to the claims, the following description of exemplary embodiments applying the principles of the invention, and the respective exemplary drawings.
**Figure 1A** is a lateral view of a brake assembly according to an exemplary embodiment of the present invention in a first operating mode;
**Figure 1B** is a lateral view of the brake assembly according to Figure 1A in a second operating mode;
**Figure 2** is a cross-sectional view of a section of the brake assembly according to Figures 1A and 1B with respect to a view A-A as indicated in Figures 1A and 1B;
**Figure 3** is a front view of a converter unit according to a first exemplary embodiment of a converter unit;
**Figure 4** is a front view of a converter unit according to a second exemplary embodiment of a converter unit;
**Figure 5A** is a top view of a converter unit and braking element according to a third exemplary embodiment;
**Figure 5B** is a cross-sectional view of the converter unit and braking element according to Figure 5A with respect to a view B-B as indicated in Figure 5A;
**Figure 6A** is a top view of a converter unit and braking element according to a fourth exemplary embodiment;
**Figure 6B** is a cross-sectional view of the converter unit and braking element according to Figure 6A with respect to a view B-B as indicated in Figure 6A;
**Figure 7A** is a top view of a converter unit and braking element according to a fifth exemplary embodiment; and
**Figure 7B** is a cross-sectional view of the converter unit and braking element according to Figure 7A with respect to a view B-B as indicated in Figure 7A.

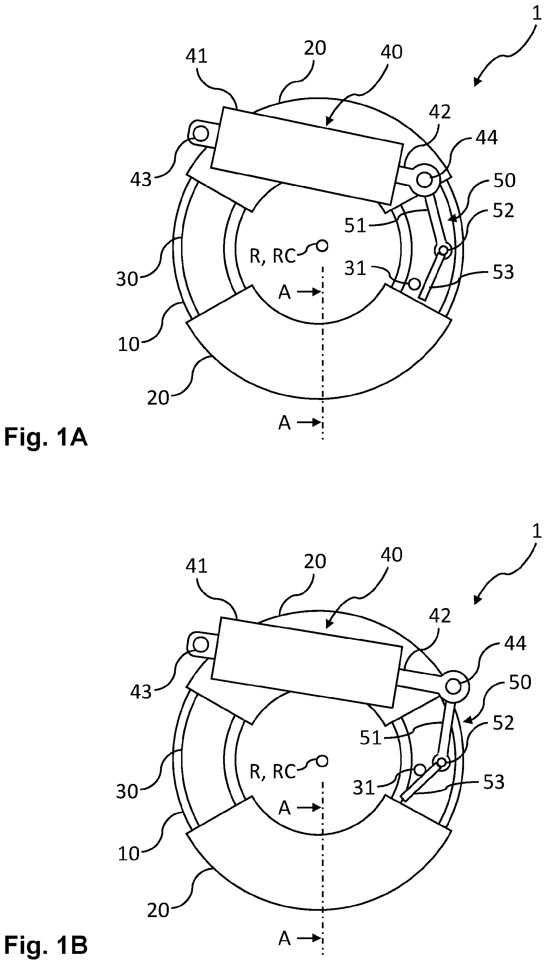

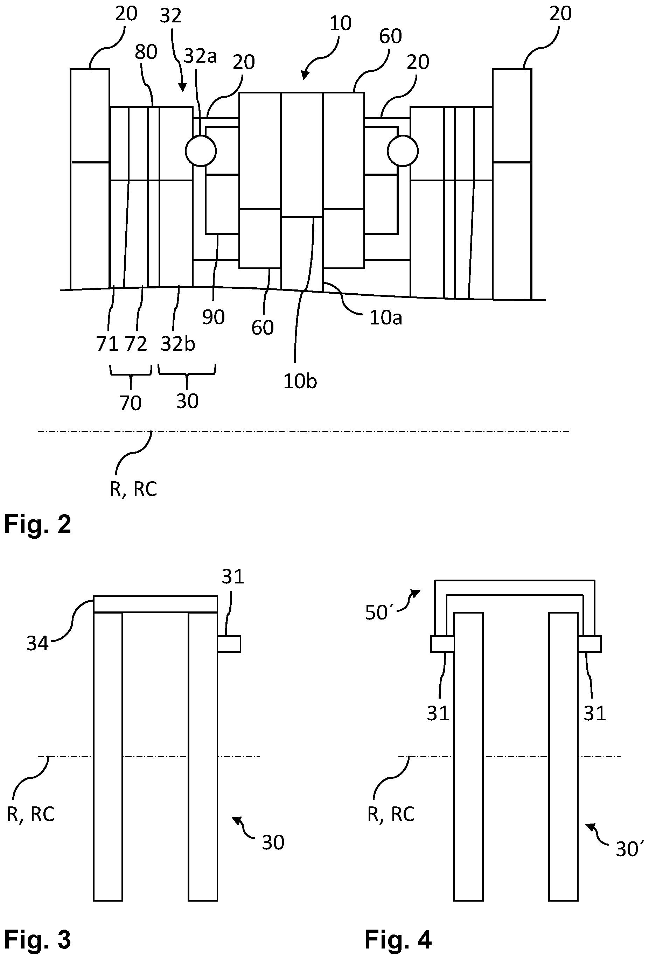

**Figure 1A** shows a lateral view of a brake assembly 1 according to an exemplary embodiment of the present invention in a first operating mode. The brake assembly 1 of the exemplary embodiment is a disc brake assembly comprising a brake disc 10 as brake element rotationally supported about a rotational axis R and two brake calipers 20, each of which comprises two brake pads 60 (**Figure 2**) arranged on opposite sides of the brake disc to face opposite radial surface of the brake disc 10 extending in a radial direction with respect to the rotational axis R.

The brake assembly 1 further comprises a ring actuator 30 as converter unit rotatably supported about a converter unit rotational axis RC. In the exemplary embodiment, the converter unit rotational axis RC is coaxially aligned with the rotational axis R of the brake disc 10. The ring actuator 30 is of continuous annular shape with the radial surfaces of the ring actuator 30 with respect to the converter unit rotational axis RC extend annularly around the converter unit rotational axis RC. The radial surfaces of the ring actuator 30 are in parallel to the radial surfaces of the brake disc 10 with respect to the rotational axis R of the brake disc 10. However, in other embodiments, the radial surfaces of the ring actuator 30 may be inclined with respect to the radial surfaces of the brake disc 10 and/or the converter unit rotational axis RC may be offset and/or inclined with respect to the rotational axis R of the brake disc 10. One radial surface of the ring actuator 30 is facing one radial surface of the brake disc 10. The ring actuator 30 is arranged between the brake disc 10 and the brake calipers 20 with a respective brake pad of each of the calipers associated with a respective radial surface being arranged between the ring actuator 30 and the brake disc 10. The ring actuator 30 comprises a pin 31 as engaging member protruding from the radial surface of the ring actuator 30 opposite to the radial surface of the ring actuator 30 facing the brake disc 10.

To rotationally drive the ring actuator 30, the brake assembly 1 further comprises a lever mechanism 50 and a piston actuator 40 as translational driving device to drive the lever mechanism 50. The lever mechanism 50 comprises a driven lever 51 to be driven by the piston actuator 40 and a driving lever 53 to drive the ring actuator 30. The driven lever 51 and the driving lever 53 are connected to each other to provide a constant positional relationship. Here, the connection is a form fit connection but may also be a force-fit or firmly bonded connection in other embodiments. As a further alternative, the driven lever 51 and the driving lever 53 may be integrally formed. The driven lever 51 and the driving lever 53 are rotatably supported about a stationary lever pivot 52, here, with the driven lever 51 and the driving lever 53 extending therefrom in respective radial directions with respect to the rotational axis of the stationary lever pivot 52. One end of the driven lever 51 opposed to the stationary lever pivot 52 in the radial direction with respect to the stationary lever pivot 52 is rotatably connected to a second piston actuator pivot 44 as a driven lever translational driving device pivot. The second piston actuator pivot 44 is provided by an actuator piston 42 as translational driving member of the piston actuator 40. The actuator piston 42 is received within a piston actuator housing 41 and relatively movable with respect to the piston actuator housing 41 in a translational movement direction. Due to such relative translational movement the actuator piston 42 is extendable with respect to a stationary first piston actuator pivot 43 as stationary translational driving device pivot. In the exemplary embodiment, the piston actuator 40 is a pneumatic spring loaded piston actuator. However, in other embodiments, the piston actuator 40 may be hydraulically or electrically driven with or without being spring loaded.

In the operation mode shown in **Figure 1A****,** the actuator piston 42 is retracted with respect to the stationary first piston actuator pivot 43 being arranged on an opposite side of the piston actuator housing 41 in the translational movement direction with respect to the actuator piston 42. Accordingly, the driven lever 51 rotatably supported by the second piston actuator pivot 44 is in a position pulled towards the stationary first piston actuator pivot 43. Since the driving lever 53 is in a constant positional relationship with respect to the driven lever 51, the driving lever 53 is thereby in a position out of an operative engagement with the pin 31. Here, as shown in the drawing, there is a clearance between the driving lever 53 and the pin 31 in the given operating mode. Out of an operative engagement of the driving lever 53 with respect to the pin 31 relates to the driving lever 53 being distanced from the pin 31 and thereby not driving the pin and thereby the ring actuator 30 in accordance with a movement of the driving lever 53 until engaging the pin 31 to be driven. This also applies for a configuration, where the driving lever 53 may contact the pin 31 but without applying a respective movement of the pin 31. In other words, a first point of contact of the driving lever 53 and the pin 31 can be assumed as reference for the driving lever 53 for starting to drive the pin 31 and thereby the ring actuator 30 upon further movement of the driving lever 53. If the driving lever 53 is out of an operative engagement with the pin 31 but already in contact with the pin 31 when the actuator piston 42 is retracted, the hub of the actuator piston can be reduced as the actuator piston 42 has not to bridge an empty space before driving the pin 31. However, some distance between the driving lever 53 and the pin 31 before an operative engagement may be advantageous to avoid an unintended actuation, e.g. due to vibrations and/or tolerances, which may result in unintended slight braking effects.

Accordingly, a translational movement of the actuator piston 42 in a retracted position moves the driving lever 53 via the driven lever 51 away from the pin 31. As the driving lever does not engage the pin 31 in the given operating mode, the ring actuator 30 is not rotated about the converter unit rotational axis RC. In such operating mode, the ring actuator 30 does not act on the respectively assigned brake pads 60 to move such brake pads 60 towards the brake disc 10.

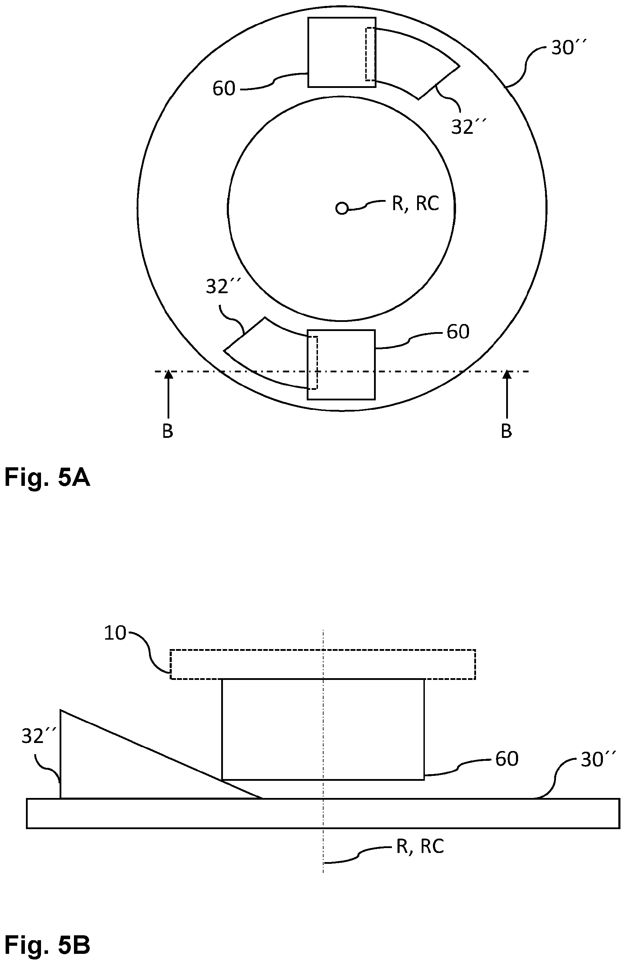

**Figure 1B** shows a lateral view of the brake assembly according to **Figure 1A** in a second operating mode. The second operating mode corresponds to a brake mode with the brake pads 60 being moved towards the brake disc 10 to apply a braking force. To apply a braking force on the brake disc 10, the actuator piston 42 is extended away from the stationary first piston actuator pivot 43 in the translational movement direction. The driven lever 51 is thereby rotated about the stationary lever pivot 52. Due to such rotation, the piston actuator 40 is rotated about the stationary first piston actuator pivot 43 to compensate for the displacement of the second piston actuator pivot 44 during rotation of the driven lever 51. As the driven lever 51 or the end thereof connected to the second piston actuator pivot 44, respectively, is moved away from the stationary first piston actuator pivot 43 by the translational movement of the actuator piston 42, the driving lever 53 is rotated about the stationary lever pivot 52 towards the pin 31. With engagement of the pin 31 and advanced rotation of the driving lever 53, the ring actuator 31 is rotationally driven about the converter unit rotational axis RC. Due to the rotational movement of the ring actuator 30, the ring actuator 30 moves the respective brake pads 60 assigned thereto towards the brake disc 10 to apply a braking force on the brake disc 10 in accordance with the rotational position of the ring actuator 30 and therefore the translational movement of the respective brake pads towards the brake disc 10. Accordingly, the braking force on the brake disc 10 is dependent on the rotational position of the ring actuator 30 with respect to the brake pads 60 or the brake disc, respectively. Exemplary embodiments of mechanisms to move the brake pads 60 towards the brake disc 10, e.g. the ring actuator 30 or a converter unit in general, will be described with respect to **Figures 5A to 7B****.**

**Figure 2** shows a cross-sectional view of a section of the brake assembly 1 according to **Figures 1A** and **1B** with respect to a view A-A as indicated in Figures **1A** and **1B****.** Specifically, the illustrated section is a representation of the configuration arranged between two opposed sides of a non-rotatable brake caliper 20 in a direction in parallel with the rotational axis R and the converter unit rotational axis RC, respectively. The brake caliper 20 is a floating caliper stationary with respect to a rotational movement but axially moveable with respect to the rotational axis R. However, in other embodiments, the brake caliper may be a fixed caliper. With respect to the brake disc 10 in respective directions in parallel with the rotational axis R and the converter unit rotational axis RC, respectively, the configuration between a radial surface 10a of the brake disc 10 extending in the radial direction of the rotational axis R and an inner surface of a respective brake caliper portion facing the respective radial surface 10a is symmetrically. Accordingly, only the configuration on one side of the brake disc 10 is described, while the same description is transferable to the configuration on the other side of the brake disc 10. As apparent from the symmetric arrangement, the ring actuator 30 comprises two annular portions opposed to each other in the direction of the converter unit rotational axis RC connected to each other by a connection member 34 (**Figure 3**).

Starting from the radial surface 10a of the brake disc 10 towards the opposed surface of the brake caliper 20 in the direction of the rotational axis R of the brake disc 10, a brake pad 60, followed by a stationary ball track 90, the ring actuator 30, axial needle bearing 80 and a slack adjusting unit 70 are arranged between the radial surface 10a of the brake disc 10 and the respectively opposed surface of the brake caliper 20. The ring actuator comprises a control slide 32 comprising a rotational ball track 32b and a ball 32a guided within the rotational ball track 32b and the stationary ball track 90 to move the brake pad 60 towards the brake disc 10, when the ball 32a increases the distance between the ring actuator 30 and the brake pad 60 in accordance with a rotational position of the ring actuator 30 with the position of the ring actuator 30 in the direction of the converter unit rotational axis RC being stationary. The axial needle bearing 80 is arranged between the ring actuator 30 and the slack adjusting unit 70 and the respective surface of the brake caliper 20, respectively, to allow the ring actuator 30 to rotate without transferring such rotational movement or a respective torque on the slack adjusting unit 70 and the respective surface of the brake caliper 20, respectively. The slack adjusting unit 70 comprises a first adjusting control slide 71 and a second adjusting control slide 72 with the control slides facing each other in the direction of the rotational axis R and the converter unit rotational axis RC, respectively. The first adjusting control slide 71 and the second adjusting control slide 72 are configured to slide on each other in a rotational direction about the rotational axis R and the converter unit rotational axis RC, respectively, to provide different thicknesses of the slack adjusting unit 70 in the direction of the converter unit rotational axis RC to compensate for wear and/or tolerances.

**Figure 3** shows a front view of the ring actuator 30 as a converter unit according to a first exemplary embodiment of the converter unit. The ring actuator 30 is applicable to the brake assembly 1 as per **Figures 1** and **2****.** As previously described, the ring actuator 30 comprises two annular portions opposed to each other in the direction of the converter unit rotational axis RC connected to each other by the connection member 34. In other words, the ring actuator 30 may be assumed as double ring actuator with each of the ring actuators intended to be arranged on one side of the brake disc. Accordingly, the ring actuator 30 comprises only one pin member 31 to be driven for a rotational movement of the ring actuator 30 as both of the annular portions are connected by the connection member. In the exemplary embodiment, the connection member 34 is arranged at an outer circumference of the ring actuator 30. In other embodiments, the connection member may be disposed at an inner circumference of the ring actuator 30 or the like. The ring actuator 30 may comprise a plurality of connection members, e.g. to enhance a stiffness of the ring actuator 30.

**Figure 4** shows a front view of a converter unit 30' according to a second exemplary embodiment of the converter unit. The converter unit 30' is comprised of two ring actuators, like the ring actuator 30, each of which comprising the engaging member 31. Instead of two annular portions being connected by the connection member 34 driven by one engaging member 31 as per the first embodiment, the two ring actuators of the converter unit 30' are simultaneously actuated by a lever mechanism 50' simultaneously engaging each of the engaging members 31 of ring actuators.

**Figure 5A** is a top view of a ring actuator 30" as converter unit and the braking element 60 according to a third exemplary embodiment. The top view represents the principles of the actuation of at least two braking pads 60 on the same radial surface of brake disc 10. Each of such at least two braking pads may be associated with a different brake caliper 20. Accordingly, the respective actuation may be also applied to the other braking pads 60 of the brake caliper 20 on the opposed radial surface of the brake disc 10 according to the principles previously described. This is also applicable to the further embodiments described in the following.

The ring actuator 30" comprises the two wedge members 32 as control slides extending from a radial surface of the ring actuator 30" facing the brake pad 60. The wedge members 32 form a ring segment on the ring actuator 30" in a circumferential direction of the ring actuator 30". The inclination of the respective wedge surfaces facing in the direction of the brake pad provides a lower height in the rotational direction of the ring actuator 30" rotating about the converter rotational axis RC in a braking direction to arrive at the respective brake pad 60 first, before the height towards the respective brake pad 60 increases. Consequently, the brake pads 60 are translationally moved away from the ring actuator 30 when the wedge members 32 come in contact with the brake pads 60 and are further rotated for an advancing movement of the inclined surfaces of the wedge members 32 with increasing height with respect to a first point of contact. In general, a rotational movement of the ring actuator 30" is converted into a translational movement of the brake pads 60 towards the brake disc 10 by the control slides. As such movement of the brake pads 60 in the given embodiment is restricted to the rotational angles, the wedge members 32 are effective on the brake pads 60, the driving mechanism for driving the ring actuator 30" may only require the ability for a rotational movement of the ring actuator 30" over such range. In general and therefore also applicable to any other embodiments, the driving mechanism for the ring actuator 30" may be configured for a bidirectional movement to allow the ring actuator 30" to apply and release a braking force on the brake disc 10 via the brake pads 60. Alternatively or in addition, the driving mechanism may allow at least a 360° rotation of the ring actuator 30". The brake assembly 1 may also provide a retracting mechanism for the ring actuator 30" separate from the driving mechanism of the ring actuator 30".

**Figure 5B** shows a cross-sectional view of the ring actuator 30" as converter unit and one of the brake pads 60 according to **Figure 5A** with respect to a view B-B as indicated in **Figure 5A****.** Further, **Figure 5B** also shows a section of the brake disc 10 to illustrate the functional principle of the ring actuator 30" comprising the wedge members 32" as described above. According to the cross-sectional view, only one wedge member 32" and one brake pad 60 are shown. The cross-section view corresponds to a rotational position of the ring actuator 30", in which the inclined wedge surface with respect to the radial surface of the ring actuator 30" facing the respective brake pad 60 has been moved between the radial surface of the ring actuator 30" and the respective brake pad 60 due to the rotational movement of the ring actuator 30". Accordingly, the brake pad 60 has been moved towards the brake disc 10 opposed to the ring actuator 30" with the brake pad 60 therebetween to come in contact with the brake disc 10. With an advanced rotation of the ring actuator 30" and thereby the wedge member 32" the increasing height of the wedge member 32" extending in a direction towards the surface of the brake pad 60 to be actuated, i.e. the surface of the brake pad 60 facing the radial surface of the ring actuator 30", results in an advanced movement of the brake pad 60 towards the brake disc 10. As the brake disc 10 and the ring actuator 30" are stationary in an axial direction with respect to the their respective rotational axes R, RC, the brake pad 60 applies an increasing braking force on the brake disc 10 with such advanced movement.

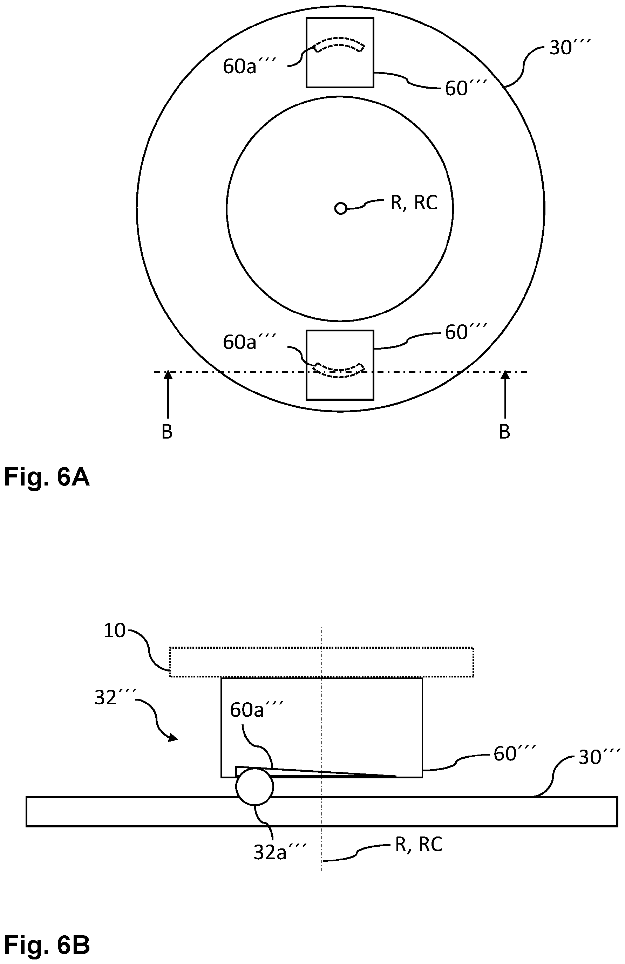

**Figure 6A** is a top view of a ring actuator 30''' as converter unit and brake pads 60''' as braking elements according to a fourth exemplary embodiment. The brake pads 60''' of the fourth embodiment differ from the brake pads 60 of the third embodiment in that the brake pads 60''' comprise a ball track 60a'''. The ball track 60a''' extends as ring section in a circumferential direction of the of the ring actuator 30''' with the converter rotational axis RC as point of origin for the radius of the curvature of such ring section.

**Figure 6B** shows a cross-sectional view of the ring actuator 30''' as converter unit and the brake pads 60''' as braking element according to **Figure 6A** with respect to a view B-B as indicated in **Figure 6A****.** As illustrated, the ring actuator 30''' of the fourth embodiment differs from the ring actuator 30" of the third embodiment in that the ring actuator 30''' comprises two ball ramp mechanisms 32''' as control slides interacting with the respective brake pads 60'''. According to the cross-sectional view, only one ball ramp mechanism 32''' and one brake pad 60''' are shown. The ball ramp mechanism 32''' comprises a ball 32a''' rotatably supported on the radial surface of the ring actuator 30''' facing the brake pad 60'''. The ball 32a''' is configured to be guided in the ball track 60a'''. As apparent from the cross-sectional view, the ball track 60a''' provides a depth in an axial direction with respect to the converter unit rotational axis RC, which decreases from one end of the ball track 60a''' to another in the circumferential direction. The position of the ball 32a''' along the ball track 60a''' corresponds to a rotational position of the ring actuator 30'''. Dependent on the position of the ball 32a''' along the ball track 60a''' a distance between the radial surface of the ring actuator 30''' facing the brake pad 60''' and the brake pad 60''' differs in accordance with the respective depth of the ball track 60a'''. The exemplary embodiment shows the ball 32a''' in a position to be received by the maximum depth of the ball track 60a''', in which the brake pad 60''' is near to but not in contact with the brake disc 10. With a rotational movement of the ring actuator 30''' to guide the ball 32a''' in a direction from the position with the maximum depth of the ball track 60a''' to a position with a minimum depth of the ball track 60a''', the distance between the ring actuator 30''' and the brake pad 60''' in the axial direction of the converter unit rotational axis RC increases. Upon such rotation of the ring actuator 30''' the brake pad 60''' comes in contact with the brake disc 10. As the brake disc 10 and the ring actuator 30''' are stationary in an axial direction with respect to the their respective rotational axes R, RC, the brake pad 60''' applies an increasing braking force on the brake disc 10 with an advanced movement after contacting the brake disc 10.

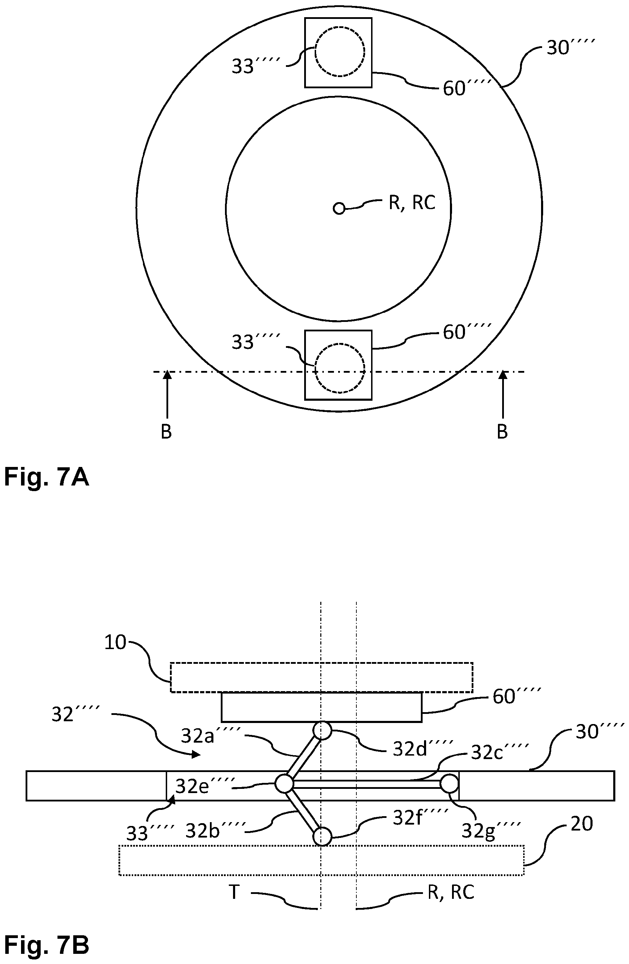

**Figure 7A** shows a top view of a ring actuator 30'''' as converter unit and brake pads 60'''' as braking elements according to a fifth exemplary embodiment. The fifth embodiment differs from the third and fourth embodiment by the ring actuator 30'''' comprising a toggle lever mechanisms 32'''' (**Figure 4B**) to actuate the brake pads 60'''' instead of control slides, like the wedge member 32" or the ball ramp mechanism 32'''. To accommodate and actuate the toggle lever mechanisms 32'''' the ring actuator 30"" comprises respective toggle lever mechanism openings 33"" for each of the toggle lever mechanisms 32"", here two according to the two brake pads 60"".

**Figure 7B** shows a cross-sectional view of the ring actuator 30'''' as converter unit and the brake pads 60'''' as braking elements according to **Figure 7A** with respect to a view B-B as indicated in **Figure 7A****.** According to the cross-sectional view, only one toggle lever mechanism 32'''' and one brake pad 60'''' are shown. The toggle lever mechanism 32'''' is supported between the brake pad 60'''' and a portion of the caliper 20 facing the brake pad 60'''' in an actuating direction by the toggle lever mechanism 32"". The toggle lever mechanism 32'''' comprises a first toggle lever 32a'''' with one end thereof being attached to the brake pad 60'''' by a first toggle lever pivot 32d'''' as an exemplary first hinge. The other end of the first toggle lever 32a'''' is connected to one end of a second toggle lever 32b'''' via a second toggle lever pivot 32e'''' as an exemplary second hinge. In turn, the other end of the second toggle lever 32b'''' is attached to the portion of the caliper 20 as counter bearing for the toggle lever mechanism 32'''' by a third toggle lever pivot 32f'''' as an exemplary third hinge. The actuating direction of the toggle lever is represented by the toggle lever axis T extending through the first and third toggle lever pivot 32d"", 32f"". The brake pad 60'''' is movable towards the brake disc 10 by spreading the first and second toggle levers 32a"", 32b'''' apart from each other and thereby increasing the actuating length of the toggle lever mechanism 32'''' in direction of the toggle lever axis T. As the brake disc 10 and the portion of the caliper 20 facing the brake pad 60'''' are stationary in an axial direction with respect to the rotational axis R, the brake pad 60'''' applies an increasing braking force on the brake disc 10 with an advanced spreading of the toggle lever mechanism 32"".

The ring actuator 30'''' is arranged between the brake pad 60'''' and the portion of the caliper 20 facing the brake pad 60"". To actuate the toggle lever mechanism 32"", the ring actuator 30"" comprises the respective toggle lever mechanism opening 33"" with the toggle lever mechanism 32"" passing therethrough in the direction of the toggle lever axis T. The ring actuator 30"" is connected to the toggle lever mechanism 32'''' via a toggle lever actuator 32c"". One end of the toggle lever actuator 32c'''' is hinged to the second toggle lever pivot and the other end of the toggle lever actuator 32c'''' is hinged to a toggle lever actuator pivot 32g'''' attached to the ring actuator 30"", here, to the inner surface of the ring actuator 30'''' forming the toggle lever mechanism opening 33'''' by circumferentially extending there around. The converter unit rotational axis RC of the ring actuator 30'''' is in parallel to but offset from the toggle lever axis T to allow the first and second toggle levers 32a'''' and 32b'''' to be spread apart or contracted by the toggle lever actuator 32c"" upon a respective rotational movement of the ring actuator 30"".

The invention has been described with respect to an exemplary embodiments. However, the invention is not limited to the exemplary embodiments.

### LIST OF REFERENCE SIGNS

- 1: brake assembly
- 10: brake disc (brake element)
- 10a: radial surface
- 10b: axial surface
- 20: brake caliper
- 30, ..., 30''''': converter unit
- 31: engaging member
- 32, 32", 32''': control slide (converter mechanism)
- 32a, 32a''': ball
- 32b: rotational ball track
- 32'''': toggle lever mechanism (converter mechanism)
- 32a'''': first toggle lever
- 32b'''': second toggle lever
- 32c'''': toggle lever actuator
- 32d'''': first toggle lever pivot
- 32e'''': second toggle lever pivot
- 32f'''': third toggle lever pivot
- 32g"": toggle lever actuator pivot
- 33"": toggle lever mechanism opening
- 34: connection member
- 40: piston actuator (translational driving device)
- 41: piston actuator housing
- 42: actuator piston (translational driving member)
- 43: first piston actuator pivot (stationary translational driving device pivot)
- 44: second piston actuator pivot (driven lever piston actuator pivot)
- 50, 50': lever mechanism
- 51: driven lever
- 52: stationary lever pivot
- 53: driving lever
- 60, 60''', 60'''': brake pad (braking element)
- 60a''': ball track (ball ramp mechanism)
- 70: slack adjusting unit
- 71: first adjusting control slide
- 72: second adjusting control slide
- 80: axial needle bearing (bearing member)
- 90: stationary ball track
- R: rotational axis (brake element)
- RC: converter unit rotational axis
- T: toggle lever axis

## Claims

1. Brake assembly (1), comprising:
a rotationally drivable brake element (10) rotationally supported about a rotational axis (R),
at least two braking elements (60, 60"', 60''''), each configured to be translationally movable towards a radial surface (10a) of the brake element (10) extending in a radial direction with respect to the rotational axis (R) and/or towards an axial surface (10b) of the brake element (10) extending in an axial direction with respect to the rotational axis (R) for applying a braking force on the brake element (10), and
a rotationally drivable converter unit (30, 30', 30", 30''', 30"", 30''''') rotationally supported about a converter unit rotational axis (RC),
wherein the brake assembly (1) is configured to transfer the rotational movement of the converter unit (30, 30', 30", 30''', 30"", 30''''') into the translational movement of the at least two braking elements (60, 60''', 60'''').

2. The brake assembly (1) according to claim 1, wherein the at least two braking elements (60, 60''', 60'''') being arranged on opposite sides of the brake element (10) with respect to the rotational axis (R) or an axis perpendicular to the rotational axis (R).

3. The brake assembly (1) according to claim 1 or 2, wherein the converter unit (30, 30', 30", 30''', 30"", 30''''') at least partially extends on two opposite sides of the brake element (10) with respect to the rotational axis (R) or an axis perpendicular to the rotational axis (R).

4. The brake assembly (1) according to any of the preceding claims, wherein the converter unit (30, 30', 30", 30''', 30"", 30''''') provides an at least partially annular or disc shape with at least one of the at least two braking elements (60, 60') being arranged between the brake element (10) and a surface of the converter unit (30, 30', 30", 30''', 30"", 30''''') perpendicular to the converter unit rotational axis (RC).

5. The brake assembly (1) according to any of the preceding claims, wherein the converter unit rotational axis (RC) is concentrically aligned with the rotational axis (R) of the brake element (10).

6. The brake assembly (1) according to any one of the claims 1 to 4, wherein the converter unit rotational axis (RC) is arranged eccentrically to the rotational axis (R) of the brake element (10).

7. The brake assembly (1) according to any of the preceding claims, wherein the converter unit (30, 30', 30", 30"', 30'''') comprises at least one converter mechanism (32, 32", 32''', 32''''), preferably at least one control slide (32, 32", 32'''), more preferably at least one wedge member (32") and/or at least one ball ramp mechanism (32, 32'''), and/or a toggle lever mechanism (32'''') and/or a spindle drive, preferably a ball screw, to transfer its rotational movement into the translational movement of the at least two braking elements (60, 60''', 60'''').

8. The brake assembly (1) according to claim 7, wherein the converter unit (30, 30''') comprising the at least one ball ramp mechanism (32, 32''') comprises a stationary ball track (60a''', 90) arranged between the ball ramp mechanism (32, 32''') and at least one of the at least two braking elements (60''').

9. The brake assembly (1) according to any one of the preceding claims, wherein the brake element (10) is a brake disc and the brake assembly (1) comprises at least one brake caliper (20) operatively connected to at least one of the at least two braking elements (60, 60''', 60'''').

10. The brake assembly (1) according to claim 9, wherein the at least one brake caliper (20) is a floating caliper or a fixed caliper.

11. The brake assembly (1) according to claim 9 or 10, wherein the converter unit (30, 30', 30", 30''', 30'''', 30''''') is at least partially arranged between an inner surface of the brake caliper (20) and at least one of the at least two braking elements (60, 60''', 60'''').

12. The brake assembly (1) according to claim 11, wherein the brake assembly (1) comprises at least one slack adjusting unit (70) at least partially disposed between the converter mechanism (32) and the inner surface of the brake caliper (20) and/or between the converter mechanism (32) and the at least one of the at least two braking elements (60).

13. The brake assembly (1) according to claim 12, wherein the slack adjusting unit (70) comprises at least two complementary adjusting control slides (71, 72).

14. The brake assembly (1) according to one of the claims 11 to 13, wherein the brake assembly (1) comprises a bearing member (80), preferably an axial needle bearing, between the converter mechanism (32) and the inner surface of the brake caliper (20).

15. The brake assembly (1) according to any of the preceding claims, wherein the converter unit (30, 30', 30", 30''', 30"", 30''''') is rotationally drivable by a motor, preferably an electric motor, and/or a lever mechanism (50, 50'), preferably a pneumatically actuated lever mechanism (50).

16. Vehicle comprising a brake assembly (1) according to one of the claims 1 to 15,
wherein the vehicle is preferably configured as a commercial vehicle, a truck, a trailer, a bus and/or as a combination of a towing vehicle and a trailer, and/or
wherein the vehicle preferably comprises a pure electric, a hybrid or a conventional powertrain.
